# EUROPÄISCHE PATENTANMELDUNG

(11) **EP 1 956 453 A1**
(43) Veröffentlichungstag der Anmeldung: **13.08.2008**
(21) Anmeldenummer: 08001681.9
(22) Anmeldetag: 30.01.2008
(51) Int. Cl.: G05B 19/19, G05B 19/416

(54) **Verfahren zum Betreiben von Maschinen mit anpassbaren Bewegungsprofilen**

(30) Priorität: 05.02.2007 DE 102007006422
(71) Anmelder: ROBERT BOSCH GMBH, 70469 Stuttgart (DE)
(72) Erfinder: Korajda, Bartosz, 97816 Lohr-Sendelbach (DE); Krauskopf, Sebastian, 97737 Gemünden (DE)
(74) Vertreter: Thürer, Andreas

(57) **Zusammenfassung**

Die Erfindung betrifft ein Verfahren zum Betreiben von gesteuerten Maschinen, wobei eine Folgebewegung wenigstens eines bewegbaren Maschinenelements der Maschine unter Verwendung eines für die Bewegung spezifischen Bewegungsprofils (11) gesteuert wird und wobei dieses Bewegungsprofil (11) der Bewegung des Maschinenelements in mehrere Profilsegmente (11a, 11b, 11c, 11d) unterteilt wird. Erfindungsgemäß sind den Profilsegmenten (11 a, 11 b, 11 c, 11 d) jeweils Leitgeber zugeordnet, wobei die Leitgeber von vorgegebenen Führungsgrößen abhängen und sich das Bewegungsprofil in den einzelnen Profilsegmenten jeweils aus den jeweiligen Leitgebern ergibt, wobei wenigstens zwei Leitgeber voneinander unterschiedlich und unabhängig sind und wenigstens zwei Leitgeber des Bewegungsprofils von zueinander unterschiedlichen Führungsgrößen abhängen.

## Beschreibung

Die vorliegende Erfindung bezieht sich auf ein Verfahren zum Betreiben von insbesondere elektronisch gesteuerten Maschinen sowie einer Steuerungseinrichtung zum Betreiben von gesteuerten Maschinen. Das erfindungsgemäße Verfahren und die erfindungsgemäße Vorrichtung werden unter Bezugnahme auf Verpackungsmaschinen, Textilmaschinen und dergleichen beschrieben. Es wird jedoch darauf hingewiesen, dass das Verfahren und die Vorrichtung auch für andere Arten von Maschinen wie Druckmaschinen oder Automatisierungsanlagen, einsetzbar sind. Daneben ist die Erfindung auch für elektrisch, hydraulisch oder pneumatisch gesteuerte Maschinen geeignet.

Im Hinblick auf die Offenbarung der vorliegenden Anmeldung wird auf die von der Anmelderin mit der vorliegenden Anmeldung gleichzeitig eingereichte weitere deutsche Patentanmeldung mit der Bezeichnung "Verfahren zum Betreiben von gesteuerten Maschinen" hingewiesen, deren gesamte Offenbarung durch diese Bezugnahme mit in die vorliegende Anmeldung aufgenommen wird.

Derartige Verfahren zum Betreiben von Maschinen sind aus dem Stand der Technik seit langem bekannt. Solche Steuerungen ermöglichen beispielsweise eine Bewegungsführung von bewegbaren Maschinenelementen dieser Maschinen. Dabei werden diese Maschinenelemente unter Verwendung eines für die Bewegung spezifischen Bewegungsprofils gesteuert. Im Stand der Technik ist es bekannt, entsprechende Bewegungsprofile bzw. Kurvenscheiben als starre Bewegungsbahn, die zyklisch durchlaufen wird, zu beschreiben. So liegt beispielsweise die DIN 21 43 (in der die Kurvenscheibe als starre Bewegungsbahn, die zyklisch durchläuft, beschreiben wird) derartigen Steuerungen zugrunde.

Bei den Verfahren aus dem Stand der Technik ist jedoch der Ablauf der Kurvenscheibe lediglich zyklisch und fest von Anfang bis Ende definiert. Eine Änderung der Bewegungsbahn ist daher nur durch manuelles Umschalten zu einer anderen Kurvenscheibe möglich.

Die EP 1 220 069 B1 beschreibt ein Verfahren zur Erstellung flexibler Kurvenscheibenfunktionen über ein Steuerungs- oder Anwendungsprogramm. Dabei wird eine Kurvenscheibenfunktion, welche eine Bewegung eines Maschinenelementes beschreibt, abschnittweise beschrieben, wobei aufeinanderfolgende Bewegungsabschnitte durch Segmente bzw. Punkte definiert werden und zwischen solchen Bewegungsabschnitten nach einer vorgebbaren Interpolationsvorschrift interpoliert wird. Daneben sind Befehle zur Vorgabe und zum Einfügen von Punkten, Segmenten und Interpolationsvorschriften zur Laufzeit vorgesehen, wobei die Kurvenscheibenfunktion über Befehle im Laufzeitsystem einer Maschinensteuerung erstellt wird. Gleichwohl wird in der EP 1 220 069 B1 ein zyklischer bzw. starrer Bewegungsablauf erzeugt, der immer von einer Führungsgröße abhängt, und insbesondere sind keine Sprünge in einzelnen Bewegungsschritten des Bewegungsablaufs möglich. Auch sind die einzelnen Bewegungsbahnen nur eingeschränkt veränderbar.

Daneben ist es bei dem in der EP 1 220 069 B1 beschriebenen Verfahren nicht möglich, den Bewegungsablauf abhängig von mehreren voneinander unabhängigen Bezugsgrößen zu gestalten.

Der vorliegenden Erfindung liegt daher die Aufgabe zugrunde, ein Verfahren zum Betreiben von gesteuerten Maschinen zur Verfügung zu stellen, welches eine Bewegung in Abhängigkeit von mehreren unabhängigen und unterschiedlichen Führungsquellen erlaubt. Auch sollen, ein Verfahren und eine Vorrichtung zur Verfügung gestellt werden, welche eine schnelle und flexible Reaktion auf Prozessereignisse erlauben.

Dies wird erfindungsgemäß durch ein Verfahren nach Anspruch 1 und eine Steuerungsvorrichtung nach Anspruch 10 erreicht. Vorteilhafte Ausführungsformen und Weiterbildungen sind Gegenstand der Unteransprüche.

Bei dem erfindungsgemäßen Verfahren zum Betreiben von gesteuerten Maschinen wird eine Folgebewegung wenigstens eines bewegbaren Maschinenelements der Maschine unter Verwendung eines für diese Bewegung spezifischen Bewegungsprofils gesteuert, wobei dieses Bewegungsprofil der Bewegung des Maschinenelements in mehrere Profilsegmente unterteilt wird.

Erfindungsgemäß sind die Profilsegmente jeweils Leitgebern zugeordnet, wobei die Leitgeber von vorgegebenen Führungsgrößen abhängen und sich das Bewegungsprofil in den einzelnen Profilsegmenten jeweils aus den jeweiligen Leitgebern ergibt bzw. von diesen abhängt, wobei wenigstens zwei Leitgeber voneinander unterschiedlich und bevorzugt auch unabhängig sind und wenigstens zwei Leitgeber des Bewegungsprofils von zueinander unterschiedlichen Führungsgrößen abhängen.

Unter einer Folgebewegung wird eine Bewegung des Maschinenelements verstanden, die in Reaktion auf eine vorgegebene Funktion, wie beispielsweise eine vorgegebene Leitachse erfolgt. Mathematisch gesehen basiert die Folgebewegung auf einer Funktion f(x), die von einer Variablen x abhängt. Es ist jedoch auch möglich, dass diese Funktion von mehreren voneinander unabhängigen Variablen abhängt.

Unter den Leitgebern werden beispielsweise, wie im Stand der Technik, auch Leitachsen verstanden. Diese wiederum können durch unterschiedliche Führungsgrößen bestimmt werden.

Damit wird erfindungsgemäß ein Verfahren zur Erzeugung einer Folgebewegung aus der Verknüpfung von mehreren, unabhängigen und unterschiedlichen Führungsgrößen bzw. Leitgebern vorgeschlagen. Durch diese neue Funktionalität kann eine optimale und vor allem flexible Bewegungsführung in den oben genannten Maschinen umgesetzt werden. Im einzelnen werden den einzelnen Profilsegmenten des Bewegungsprofils oder auch dem gesamten Bewegungsprofil mehrere unterschiedliche bzw. mehrere beliebig wählbare Führungsquellen zugeordnet. Damit ergibt sich erfindungsgemäß das Bewegungsprofil bzw. Bewegungsprofil als Funktion mit mehreren Veränderlichen.

Vorteilhaft sind die Führungsgrößen aus einer Gruppe von Führungsgrößen ausgewählt, welche Positionen, beispielsweise Positionen weiterer Elemente, Zeiten, Drücke, Geschwindigkeiten, Momente, Kräfte, Kombinationen hieraus und dergleichen, enthält. Dabei ist es besonders vorteilhaft möglich, unterschiedliche Führungsgrößen wenigstens teilweise unterschiedlich zu gewichten. Damit können mit dem Verfahren die genannten unterschiedlichen Führungsgrößen bei der Ermittlung des Bewegungsprofils berücksichtigt werden und insbesondere auch unterschiedlich gewichtet werden.

Auch ist es möglich, unterschiedliche Führungsgrößen zu kaskadieren, also beispielsweise die Abhängigkeit von einer zweiten Größe erst dann zu berücksichtigen, wenn die Abhängigkeit von einer ersten Größe zu einem bestimmten Ergebnis geführt hat. Vorzugsweise wird die Folgebewegung in Echtzeit erzeugt, d. h. bei dem erfindungsgemäßen Verfahren handelt es sich um ein echtzeitfähiges Verfahren.

Vorteilhaft wird wenigstens ein sich aus einem Profilsegment ergebendes Bewegungsprofil als Leitgeber bzw. Führungsgröße für ein weiteres Profilsegment verwendet. Mit anderen Worten wird hier eine resultierende Bewegungsbahn selbst wieder als Führungsgröße für eine Leitgeber eines weiteren Profilsegments bzw. einer weiteren Folgebewegungsbahn verwendet. Dadurch wird erreicht, dass Profilsegmente flexibler gestaltet werden können. Mathematisch bedeutet diese Ausführungsform, dass das resultierende Profilsegment sich aus einer Funktion g (f(x)) ergibt, wobei diese Funktion die letztlich resultierende Bewegungsbahn beschreibt. Auch sind andere mathematische Verknüpfungen denkbar, wie eine Überlagerung oder Aufhebung einzelner Leitgebern oder Führungsgrößen oder eine Verstärkung einzelner Führungsgrößen.

Bei einem weiteren bevorzugten Verfahren werden mehrere Leitgebern miteinander verknüpft. Dies bedeutet einerseits, dass es möglich ist, Profilsegmente ohne Lücken oder Knicke ineinander über zu führen und es andererseits möglich ist, mehrere Leitgebern beispielsweise von einzelnen gemeinsamen Führungsgrößen abhängig zu gestalten, von anderen Führungsgrößen jedoch unabhängig. So könnte sich beispielsweise ein Bewegungsprofil (-segment) aus einer Funktion f(x, y) ergeben und ein weiteres Bewegungsprofil (-segment) aus einer Funktion g(x, z).

Vorteilhaft ist weiterhin wenigstens ein Zwischensegment vorgesehen, mit dem ein Übergang zwischen zwei Profilsegmenten, die von unterschiedlichen Leitgebern abhängen, ermittelt wird. Vorzugsweise kann dieses Zwischensegment, das im Folgenden auch als Flexsegment bezeichnet wird, den Übergang zwischen unterschiedlichen Profilsegmenten bzw. Bewegungssektoren in Echtzeit berechnen. So kann beispielsweise durch ein derartiges Flexsegment ein Übergang zwischen einer zeitbasierten Steuerung und einer ortsbasierten Steuerung ermöglicht werden. Dies wird genauer unter Bezugnahme auf die Figuren erläutert. Ein derartiges Flexsegment kann auch am Anfang oder Ende eines Bewegungsprofils angeordnet sein, um die Synchronisation mit Anfangs- und Endpunkten zu gewährleisten.

Bei einem weiteren vorteilhaften Verfahren wird jedem der Profilsegmente wenigstens eine Bewegungsbedingung zugeordnet, welche dieses Profilsegment beeinflusst, wobei jede Bewegungsbedingung wenigstens ein auslösendes Ereignis und wenigstens ein diesem auslösenden Ereignis zugeordnetes und von dem auslösenden Ereignis ausgelöstes Aktionsereignis umfasst, wobei das Aktionsereignis das Profilsegment beeinflusst.

Unter einer Bewegungsbedingung wird damit eine Zusammenstellung aus wenigstens einem auslösenden Ereignis und einem diesen auslösenden Ereignis zugeordneten Aktionsereignis verstanden. Bevorzugt ist jedem auslösenden Ereignis genau ein Aktionsereignis zugeordnet. Umgekehrt können einem Aktionsereignis mehrere auslösende Ereignisse zugeordnet sein. Unter Profilsegmenten werden, wie gesagt, Ausschnitte des gesamten Bewegungsprofils verstanden. Bevorzugt sind die einzelnen Profilsegmente hintereinander angeordnet und ergeben in Ihrer Gesamtheit wiederum das gesamte Bewegungsprofil der Bewegung des Maschinenelements. Auch können Bedingungen dem gesamten Bewegungsprofil bzw. mehreren Profilsegmenten zugeordnet sein.

Durch das Vorsehen von Bewegungsbedingungen für die einzelnen Profilsegmente ist eine direkte Einflussnahme auf das Segment möglich und auch sind Sprünge von einem bestimmten Profilsegment zu einem anderen Profilsegment möglich. So kann beispielsweise bei Vorliegen eines bestimmten auslösenden Ereignisses von einem dritten Profilsegment auf ein siebtes Profilsegment gesprungen werden.

Vorteilhaft werden die oben genannten Bedingungen zum Ausführungszeitpunkt überwacht und in Echtzeit abgewickelt. Auch die jeweiligen Bahnänderungen bzw. die Änderungen des Bewegungsprofils, die durch die Bedingungen ausgelöst werden, werden in Echtzeit neu berechnet. Auf diese Weise wird eine echtzeitfähige und ereignisgesteuerte Bewegungsführung erreicht und eine schnelle und flexible Anpassung von Bewegungsprofilen an externe Ereignisse möglich. Auch sind, wie erwähnt, Sprünge zwischen den Segmenten innerhalb eines Bewegungsprofils möglich, was zu einer hohen Bahnberechnungsflexibilität und einer hohen Benutzungsfreundlichkeit im Sinne einer intuitiven Bedienung führt. Daneben ist auch eine schnelle Reaktion auf Prozessereignisse möglich.

Vorzugsweise wird durch ein auslösendes Ereignis eine Änderung wenigstens eines Profilsegments bewirkt. Es kann jedoch auch durch ein auslösendes Ereignis Einfluss auf mehrere Profilsegmente genommen werden. Auslösende Ereignisse können verschiedene Zustände oder Führungsgrößen sein. Daneben kommen als auslösende Ereignisse auch externe Ereignisse sowie benutzergesteuerte auslösende Ereignisse in Betracht.

Die Änderung dieses Profilsegments wird vorzugsweise in Echtzeit berechnet, was die Flexibilität des Verfahrens erhöht.

Vorteilhaft wird die Berechnung der Änderung eines Profilssegments bzw. des Bewegungsprofils durch vorgegebene Bewegungsgesetze und besonders bevorzugt in Echtzeit durchgeführt. Bewegungsgesetze definieren die Gesetzmäßigkeit beispielsweise zw. An -und Abtriebsfunktionen und allgemein für die Darstellung von Bewegungsprofilen und legen so den Verlauf der Bahn fest. Ein Bewegungsgesetz wird im Allgemeinen über die Parameter Hub, Leitgeberabschnitt bzw. mathematisch gesprochen den Abschnitt auf einer x-Achse für eine Funktion f(x), über Randwerte des betreffenden Segments und Wendepunktverschiebungen eindeutig definiert. Die Randwerte können jeweils durch ihre Parameter Geschwindigkeit, Beschleunigung und Ruck dargestellt werden, wobei Ruck die Ableitung der Beschleunigung nach der Zeit ist.

Als (normierte) Übertragungsfunktion kommen beispielsweise Polynome n-ten Grades, insbesondere fünften oder siebten Grades, lineare Rast, modifizierte Beschleunigungstrapeze und dergleichen in Betracht. Im Rahmen dieser Beschreibung wird Hub als Funktion des Leitgeberabschnitts definiert.

Die vorliegende Erfindung ist weiterhin auf eine Steuerungsvorrichtung zum Betreiben von gesteuerten Maschinen gerichtet, wobei diese Steuerungsvorrichtung derart gestaltet ist, dass sie eine Bewegung wenigstens eines bewegbaren Maschinenelements der Maschine unter Verwendung eines für diese Bewegung spezifischen Bewegungsprofils steuert, wobei dieses Bewegungsprofil in eine Vielzahl von Profilsegmenten unterteilt ist. Erfindungsgemäß ist eine Steuerungseinrichtung vorgesehen, welche bewirkt, dass die Profilsegmente jeweils Leitgebern zugeordnet werden, wobei die Leitgebern von vorgegebenen Führungsgrößen abhängen und sich das Bewegungsprofil in den einzelnen Profilsegmenten jeweils aus den jeweiligen Leitgebern ergibt, wobei wenigstens zwei Leitgebern voneinander unterschiedlich und bevorzugt unabhängig sind und wenigstens zwei Leitgebern des Bewegungsprofils von zueinander unterschiedlichen Führungsgrößen abhängen.

Auch mit der erfindungsgemäßen Vorrichtung wird eine höhere Flexibilität der Bewegungsprofile bzw. Bewegungsprofile erreicht. Auch kann durch die Abhängigkeit von mehreren Führungsgrößen eine automatische bzw. dynamische Anpassung an den Prozesszustand erfolgen und durch eine intuitive Bedienung ist eine höhere Benutzerfreundlichkeit möglich. Auch wird die Bahnberechnungsflexibilität erhöht.

Weitere vorteilhafte Ausführungsformen ergeben sich aus den beigefügten Zeichnungen. Darin zeigen:
- Fig. 1: eine Veranschaulichung eines erfindungsgemäßen Verfahrens zur Erzeugung eines Bewegungsprofils;
- Fig. 2: eine Darstellung zur Veranschaulichung der unterschiedlichen Leitgeber;
- Fig. 3: eine Darstellung zur Erläuterung der erfindungsgemäßen Flexsegmente;
- Fig. 4: eine zweidimensionales Zeitdiagramm zur Veranschaulichung eines Bewegungsprofils mit unterschiedlichen Leitgebern;
- Fig. 5: eine dreidimensionale Darstellung zur Veranschaulichung von Bewegungsprofilen bei unterschiedlichen Leitgebergeschwindigkeiten;
- Fig. 6: ein Bewegungsprofil mit zwei Profilsegmenten mit Zeitleitgeber;
- Fig. 7: eine Veranschaulichung zu einem Bewegungsprofil mit einem Zeitleitgeber;
- Fig. 8: ein Bewegungsprofil mit unterschiedlichen Leitgebern und Flexsegmenten;
- Fig. 9: Veranschaulichung eines Bewegungsprofils mit mehreren Leitgebern bei Änderung eines Leitgebers; und
- Fig. 10: eine dreidimensionale Darstellung von mehreren Bewegungsbahnen des gleichen Bewegungsprofils mit unterschiedlichen Leitgebern und variierenden Leitgebergeschwindigkeiten.

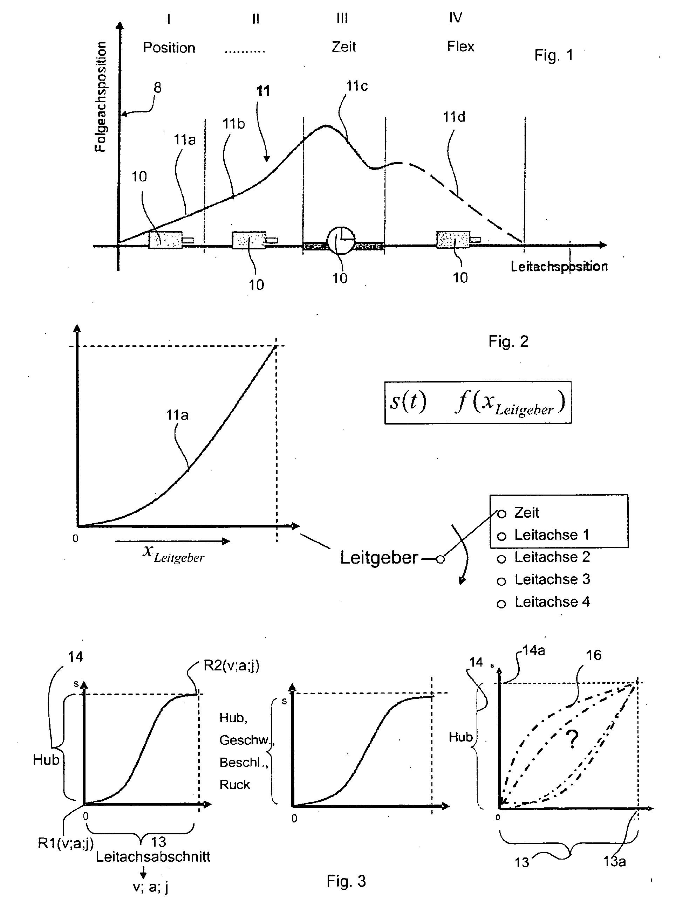

Fig. 1 zeigt eine Veranschaulichung eines Bewegungsprofils 11, welches von mehreren Leitgebern abhängt. Dabei weist dieses Profil vier Profilsegmente 11a - 11 d auf, die in vier Leitachsabschnitten I - IV liegen. In dem ersten Profilsegment 11a dient als Leitgeber die Position, beispielsweise die Position eines Elements bzw. einer Leitachse. Auf Grundlage dieser Leitachsposition wird die Folgeachsposition berechnet, wodurch sich das Bewegungsprofil 11 in diesem ersten Leitachsabschnitt 1 ergibt. Das Bezugszeichen 10 symbolisiert dabei die einzelnen Leitgeber.

In dem zweiten Leitachsabschnitt II kann die Folgeachsposition 8 ebenfalls aufgrund einer. Leitachsposition bestimmt werden, es sind jedoch auch andere Zustandsgrößen denkbar, um die Folgeachsposition zu bestimmen.
In dem dritten Leitachsabschnitt III wird die Folgeachsposition 8 in Abhängigkeit von der Zeit bestimmt und ist damit bevorzugt nicht unmittelbar von der Leitachsposition abhängig.
Das Profilsegment 11 d ist als Flexelement ausgeführt, um Bewegungsschritte, die von unterschiedlichen Führungsgrößen abhängen, zu synchronisieren.

Damit ist das Bewegungsprofil 11 in seiner Gesamtheit also eine Funktion mit mehreren Veränderlichen. Dabei wird hier der Bewegungsplan als Zusammenstellung bzw. als Aneinanderreihung von mehreren Bewegungsschritten bzw. Profilsegmenten erzeugt, wobei optional Verbindungs- bzw. Synchronisationsschritte (nämlich die Flexelemente) zwischen den Profilsegmenten bzw. den Bewegungsschritten mit den unterschiedlichen Führungsgrößen vorhanden sind.

Das Flexelement 11 d in dem Leitachsabschnitt IV hängt hinsichtlich seiner Randbedingungen von mehreren Führungsgrößen ab. Daher kann sich der endgültige Bewegungsplan dieses Flexsegments erst zur Laufzeit ergeben. Diese endgültige Bewegungsbahn in dem Profilsegment 11d wird von einer Steuerung aufgrund eines zuvor festgelegten Bewegungsplanes in Echtzeit berechnet. Auf diese Weise ergibt sich eine automatische bzw. dynamische Anpassung an den Prozesszustand.

Damit werden unterschiedliche Führungsgrößen in ein Bewegungsprofil integriert. Als Bewegungsschritte eignen sich Bewegungsgesetze für Kurvengetriebe (beispielsweise nach DIN 2143) bzw. allgemeine mathematische Bewegungsbeschreibungen, welche unten genauer erläutert werden.

Damit werden einfachere, flexiblere und allgemeinere Lösungsansätze für die Erzeugung der Bewegungsprofile ermöglicht.

Fig. 2 zeigt eine Darstellung zur Veranschaulichung eines auf Basis von mehreren Leitgebern erzeugten Bewegungsprofils. Dabei bezieht sich das Bezugszeichen 11 a wieder auf das Bewegungsprofil in einem Profilsegment. Auf der x-Achse wird dabei der Leitgeberabschnitt 13 eines speziellen Leitgebers aufgetragen und auf der y-Achse der Hub 14. Auf Grundlage von Bewegungsgesetzen wird die Gesetzmäßigkeit zwischen der An- und der Abtriebsfunktion definiert und so der Verlauf der Bahn festgelegt. Ein Bewegungsgesetz wird im allgemeinen über die Parameter Hub, Leitgeberabschnitt, linke Randwerte R1, rechte Bandwerte R2, Wendepunktverschiebungen sowie eine normierte Übertragungsfunktion eindeutig definiert. Als normierte Übertragungsfunktionen kommen beispielsweise Polynome n-ten Grades, insbesondere fünften Grades, lineare Rast, modifizierte Sinoiden, modifizierte Beschleunigungstrapeze u. v. m. in Betracht. Die Randwerte R1, R2 werden jeweils mit den Komponenten Geschwindigkeit, Beschleunigung und Ruck angegeben, wobei "Ruck" die Ableitung der Beschleunigung nach der Zeit ist.

Im Unterschied zum Stand der Technik werden jedoch hier nicht nur eine Leitachse sondern mehrere Leitachsen zugrunde gelegt. Das Bewegungsprofil s(t) ergibt sich als eine Funktion von dem Leitachsenabschnitt X_{Leitgeber}. Dieser Leitgeber können einerseits die Zeit sein oder auch, wie in Fig. 2 veranschaulicht, unterschiedliche Leitachsen 1 - 4. Für die Leitachsen können wiederum unterschiedliche Zustandsgrößen verwendet werden. Damit muss neben der Definition der Bewegungsgesetze für jedes Profilsegment ein Leitgeber definiert werden. Dabei ist es, anders als bei herkömmlichen Kurvenscheibenlösungen, die nur einen Leitgeber für das ganze Profil vorsehen, auch möglich, für jedes Segment einen unterschiedlichen Leitgeber festzulegen. Bei einem Leitgeber kann es sich, wie gesagt, um eine beliebige Leitachse oder auch um die Zeit handeln.

Fig. 3 zeigt eine Veranschaulichung für die im Rahmen der Anmeldung beschriebenen Flexabschnitte bzw. -segmente. Dabei bezieht sich das linke Teilbild auf einen herkömmlichen Abschnitt eines Bewegungsprofils. Hier wird ein bestimmter Leitgeberabschnitt 13 (bzw. Leitachsenabschnitt) vorgegeben und aufgrund eines bestimmten Bewegungsgesetzes ergibt sich ein Folgeachsabschnitt bzw. der Hub 14. Dabei ergeben sich gleichzeitig aus den Bewegungsgesetzen die Kennwerte für die Geschwindigkeit v, die Beschleunigung a und den Ruck j. Das mittlere Teilbild zeigt ein erfindungsgemäßes Flexsegment. Dabei wird ebenfalls der Folgeachsabschnitt aufgrund der festgelegten Randbedingungen vorgegeben. Auch die Kennwerte für die Geschwindigkeit v, die Beschleunigung a und den Ruck j sind vorgegeben. Genauer gesagt ergeben die Bewegungsgesetze die Anforderungen an die maximale Geschwindigkeit v, die Beschleunigung a und den Ruck j. Auf Grundlage dieser Vorgaben ergibt sich hier der Leitachsabschnitt 13. Damit dienen die Flexprofile hier nicht nur als herkömmliche Kurvenscheibe sondern als allgemeines Bewegungsprofil zum optimierten Positionieren und Verfahren von Achsen.

Das rechte Teilbild in Fig. 3 zeigt wiederum eine Veranschaulichung eines Flexsegments. Grundsätzlich hat dieses Flexsegment ähnliche Eigenschaften wie ein Standardsegment. Im Gegensatz zu einem Standardsegment wird jedoch entweder durch den Hub, oder eine absolute Folgeachse-Zielposition 14a und entweder einen Leitgeberabschnitt 13 oder eine absolute Leitgeberzielposition 13a bestimmt. Weiterhin wird das Flexsegement ebenso wie das Standardsegment durch die Randwerte links R1 sowie die Randwerte rechts R2 die Wendepunktverschiebung und eine normierte Übertragsfunktion bestimmt. Damit kann bei einem Flexsegment anstelle des Hubs 14 auch eine absolut zu erreichende Folgeachszielposition und statt des Leitgeberabschnitts eine absolut zu erreichende Leitachsendposition angegeben werden. Beispielsweise können der Hub und der Leitgeberabschnitt dann zur Laufzeit berechnet werden. Die Randwerte werden bevorzugt ebenfalls so angepasst, dass Geschwindigkeitssprünge bezüglich des zu bewegenden Elementes vermieden werden. Daneben ist es auch möglich, dass das Flexsegment die Randwerte der anliegenden Segmente zur Laufzeit übernimmt. Innerhalb des in dem rechten Teilbild gezeigten Leitgeberabschnitts kann das Bewegungsprofil unterschiedliche Verläufe annehmen.

Wie oben erwähnt, kann prinzipiell zwischen zwei Segmenttypen unterschieden werden, nämlich einem Standardsegment und dem in der vorliegenden Erfindung beschriebenen Flexsegment (vgl. Fig. 3). Das Standardsegment zeichnet sich durch eine starre Leitgeberkopplung aus. Damit ist dieses Segment eindeutig definiert und besitzt eine statische Bewegungsbahn. Standardsegmente werden immer relativ aber statisch definiert, also beispielsweise über den Hub und den Leitgeberabschnitt.

Wird ein Segment als Flex markiert, so kann dieses als aktives Segment betrachtet werden. Seine Bewegungsbahn wird zur Laufzeit, also in Echtzeit, aufgrund vorher f,estgelegter Randwerte korrigiert und angepasst. Auf diese Weise dienen die Flexsegmente u. a. zur Synchronisation zwischen Segmenten mit unterschiedlichen Leitgebern. Der Bewegungsverlauf innerhalb des Flexsegments, d. h. in den Rändern des Flexsegments, kann an die Prozessbedingungen angepasst werden, um beispielsweise Ruck und dergleichen zu vermeiden.

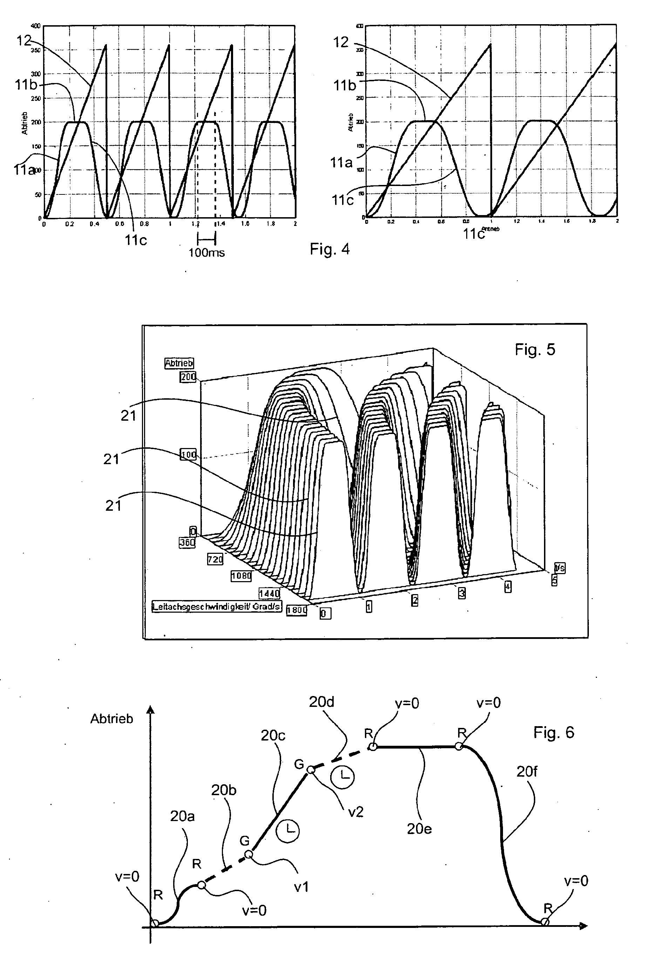

Fig. 4 zeigt eine weitere Darstellung zur Veranschaulichung der Erzeugung des Bewegungsprofils unter Verwendung unterschiedlicher Leitachsen bzw. Leitgeber. Genauer gesagt kennzeichnet das Bezugszeichen 12 die Bewegung der Leitachse. Auf der Koordinate ist die Zeit t in Sekunden aufgetragen. Das Bewegungsprofil ist hier in drei Profilsegmente 11a, 11b, 11c unterteilt. Dabei wurde jedem Profilsegment 11a, 11b, 11c separat ein Leitgeber vorgegeben und das Profilsegment 11b folgt der Zeit. Damit ist das Profilsegment 11b unabhängig von der Leitachse 1 bzw. dem Leitachsenprofil 12. Das Profilsegment 11b wird immer für 100 Millisekunden durchlaufen.

Das Bewegungsprofil in dem ersten Profilsegment 11a wird hier durch ein modifiziertes Beschleunigungstrapez dargestellt und es handelt sich hier um einen Rast→Rast-Übergang, d. h. ein Übergang von einer Geschwindigkeit des bewegten Elementes v = 0 hin zu einer Geschwindigkeit v = 0. Das zweite Profilsegment 11 b, welches von der Zeit abhängt, ist ebenfalls ein R→R-Segment, wobei hier kein Hub auftrifft und damit das Profilsegment 11 b parallel zur Koordinate verläuft. Der Leitgeberabschnitt beträgt hier genau 100 Millisekunden und zwar unabhängig von der Leitachse.

Das dritte Profilsegment 11c kann durch ein Bewegungsgesetz in Form eines Polynoms fünfter Ordnung beschrieben werden, wobei hier wieder ein Hub von -200 mm zurückgelegt wird und der Leitgeberabschnitt hier 150° beträgt. Dabei bezieht sich die Angabe ° auf eine Umdrehung der Leitachse und ergibt sich im Hinblick auf eine Volldrehung von 360°. In dem zweiten Teilbild wurde die Geschwindigkeit der Leitachse beispielsweise von 120 Umdrehungen pro Minute auf 60 Umdrehungen pro Minute reduziert. Man erkennt, dass die Länge des zweiten Profilsegments, welches unabhängig von der Leitachse ist, in beiden Teilbildern jeweils 100 Millisekunden beträgt. Da die beiden anderen Profilsegmente 11 a und 11c jedoch von der Leitachse abhängen, werden sie ebenfalls mit der Leitachsenbewegung gedehnt. Damit verändert sich hier die zeitliche Länge der Profilsegmente 11a und 11c, nicht jedoch des Profilsegments 11b.

Fig. 5 zeigt eine weitere Darstellung, wobei hier die Bewegungsprofile 21 für eine Vielzahl von Geschwindigkeiten der Leitachse aufgetragen wurden. Man erkennt, dass die Rastphase bzw. das jeweilige zweite Profilsegment 21b immer 100 Millisekunden beträgt. Durch die freie Wahl des Leitgebers kann auch entschieden werden, ob ein Segment zeitgesteuert oder in Abhängigkeit einer vorgegebenen Leitachse durchlaufen werden soll.

Fig. 6 veranschaulicht ein Bewegungsprofil 20 mit sechs Abschnitten 20a, 20b, ........ 20f. Dabei sind hier zwei Profilsegmente 20b und 20d mit Zeitleitgeber vorgesehen, was durch die beiden Uhren veranschaulicht ist. Zwei relative Flexelemente 20b und 20d dienen zwischen den Segmenten 20a und 20c bzw. 20c und 20e als Synchronisationselemente für einen ruckfreien Übergang.

Bei der gezeigten Darstellung wird beispielsweise das erste Profilsegment 20a, welches einen Überfang R→R beschreibt, durch eine beschleunigungsoptimierte Sinuslinie beschrieben. Leitgeber ist hier die Leitachse. Bei dem Flexelement 20b, welches einen Übergang von einer Geschwindigkeit v = 0 zu einer Endgeschwindigkeit v1 darstellt (R → G), wird als Bewegungsgesetz eine modifizierte Sinuide verwendet. Das Profilsegment 20c beschreibt einen Übergang von einer Geschwindigkeit v1 auf eine weitere Geschwindigkeit v2 und damit einen Übergang G→G. Als Bewegungsgesetz wird hier eine lineare Interpolation verwendet und der Leitgeberabschnitt beträgt hier 200 Millisekunden. Das Profilsegment bzw. das Flexelement 20d beschreibt wiederum einen Übergang von einer Geschwindigkeit v2 in eine Ruhelage, d. h. v = 0. Als Bewegungsgesetz wird hier ein Polynom fünfter Ordnung verwendet. Der Leitgeberabschnitt beträgt hier ebenfalls wieder 100 Millisekunden. Das Profilsegment 20e schreibt eine lineare Rast, d. h. ein Übergang von einer Geschwindigkeit v = 0 auf eine Geschwindigkeit v = 0. Das letzte Segment 20f schließlich beschreibt einen Übergang von einer Geschwindigkeit v = 0 auf die Geschwindigkeit v = 0, wobei hier als Bewegungsgesetz eine modifizierte Sinoide verwendet wird.

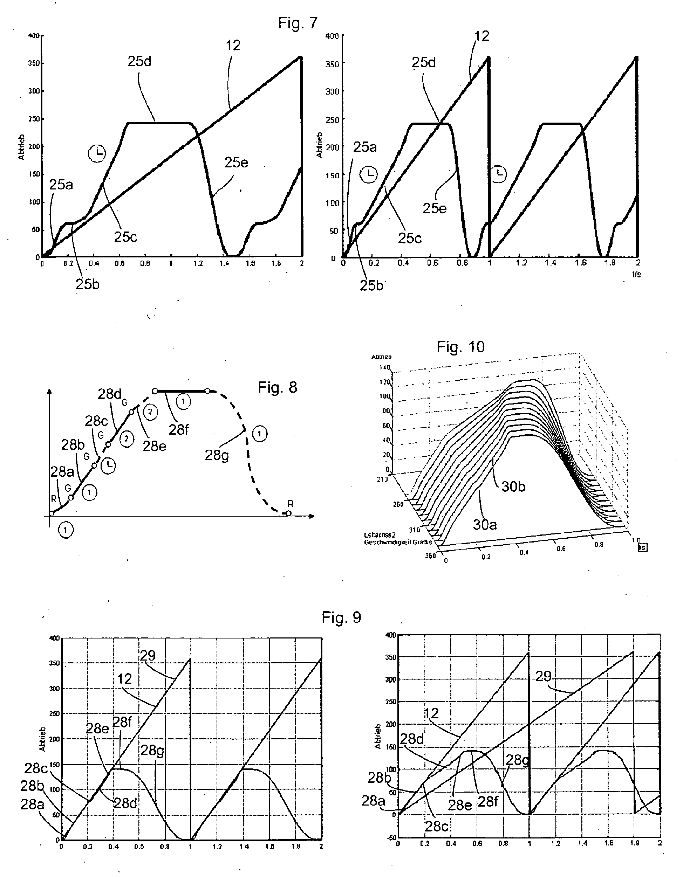

Fig. 7 zeigt eine weitere Veranschaulichung eines Bewegungsprofils bei unterschiedlichen Leitachsgeschwindigkeiten. Die Leitachsbewegung ist hier durch das Bezugszeichen 12 gekennzeichnet und die Bewegung der Folgeachse in fünf Profilsegmente, die mit den Bezugszeichen 25a - 25e gekennzeichnet sind, dargestellt. Im linken Teilbild weist die Leitachse eine bestimmte Umdrehungszahl, beispielsweise 30 U/Min., auf und im rechten Beispiel eine dem gegenüber verdoppelte Umdrehungszahl, d. h. 60 U/Min.

Das Profilsegment 25c ist hier ein Segment mit Zeitleitgeber. Man erkennt, dass dieses Segment in Folge der schnelleren Umdrehung nicht gestaucht wird. Relative Flexsegmente, hier beispielsweise die Segmente 25b und 25d erledigen den Leitgeberwechsel ohne Ruck zur Laufzeit.

Fig. 8 zeigt eine weitere Veranschaulichung eines Bewegungsprofils mit mehreren Leitgebern (1 und 2). Hier ist das Bewegungsprofil in insgesamt sieben Profilsegmente 28a - 28g unterteilt. Die beiden ersten Profilsegmente, 28a und 28b, hängen hier jeweils von einem ersten Leitgeber bzw. einer Leitachse ab. Das vierte Profilsegment 28d hängt von einem zweiten Leitgeber, bei dem es sich hier ebenfalls um eine Leitachse handelt, ab. Zwischen den beiden Profilsegmenten 28b und 28d ist ein relatives Flexsegment 28c vorgesehen, wobei als Bewegungsgesetz hier ein Polynom fünfter Ordnung dient. In dem ersten Profilsegment wird als Bewegungsgesetz ein Polynom fünfter Ordnung verwendet und in dem zweiten Profilsegment 28b eine lineare Interpolation.

In dem Flexsegment 28c findet damit eine Synchronisation über die Zeit statt, wobei hier der Leitgeber die Zeit ist. Dieses Flexsegment 28c weist einen festen Leitgeberabschnitt von 40 Millisekunden auf. Das sechste Profilsegment 28f hängt wiederum von dem Leitgeber 1 bzw. der Leitachse 1 ab. Hierbei handelt es sich um einen Übergang R → R bzw. eine lineare Rast. Zur Synchronisation ist zwischen dem vierten Profilsegment 28d und dem sechsten Profilsegment 28f ein Flexelement 28e angeordnet, wobei hier ein Übergang von einer Geschwindigkeit v1 auf v = 0 erfolgt und als Bewegungsgesetz ein Polynom fünfter Ordnung angesetzt wird. Das Bezugszeichen 28g bezieht sich auf das siebte Profilsegment, welches hier ebenfalls wieder als Flexsegment ausgeführt ist und einen Übergang R → R bewältigt.

Damit beinhaltet das in Fig. 8 gezeigte Bewegungsprofil zunächst eine Synchronfahrt R→G (Profilsegment 28a) und G→G (Profilsegment 28b) auf Leitachse 1, einem anschließenden Wechsel über die Zeit (40 Millisekunden, Profilsegment 28c) auf die Leitachse zwei (Profilsegment 28d). Hieran schließt sich wiederum eine Synchronfahrt mit dem Leitgeber Leitachse 2 (28d) an, anschließend ein Wechsel über relative 20° der Leitachse 2 (28e) in eine Rast mit der Leitachse 1 (28f). Zum Schluss wird, wie oben ausgeführt, über ein absolutes Flexelement 28g der absolute Bezug zur Leitachse 1 auf 360° wieder hergestellt. Damit wird der letzte Punkt R nicht wie die übrigen Punkte, über einen Leitgeberabschnitt definiert, sondern über den absoluten Endpunkt einer Volldrehung. Die in den Kreisen dargestellten Angaben beziehen sich jeweils auf die zugrunde liegenden Leitgeber.

Fig. 9 zeigt eine Gesamtdarstellung des in Fig. 8 ermittelten Bewegungsprofils. Im linken Teilbild weisen die erste Leitachse 12 und die zweite Leitachse 29 jeweils die gleichen Geschwindigkeiten auf und sind daher übereinander gezeichnet und nicht voneinander zu trennen.

Im rechten Teilbild wird die Geschwindigkeit der zweiten Leitachse verringert, was zu Veränderungen einzelner Segmente des Bewegungsprofils 28a - 28g führt. Genau genommen werden durch die Geschwindigkeitsänderungen der zweiten Leitachse zunächst die Profilsegmente 28d und 28e beeinflusst bzw. gestreckt. Die Profilsegmente 28a und 28b bleiben jedoch, wie sich aus einem Vergleich der beiden Teilfiguren von Fig. 9 ergibt, unverändert. Durch die Streckung der beiden von Leitachse 2 abhängigen Profilsegmente 28d und 28e muss auch das absolute Flexsegment 28 g angepasst bzw. gestaucht werden, wie sich ebenfalls aus einem Vergleich der beiden Teilbilder von Fig. 9 ergibt. Damit folgen auch hier die einzelnen Profilsegmente jeweils ihren Leitgebern und die Flexsegmente 28 c, 28e und 28g dienen als Resynchronisationselemente zwischen den Leitgeberwechseln. Das Profilsegment 28g sorgt außerdem als absolutes Flexsegment dafür, dass sich das Bewegungsprofil wieder absolut an der Leitachse 1 ausrichten kann, d, h. hier an der 360°-Position. Der nächste Durchlauf des Bewegungsprofils beginnt somit wieder bei einem Modulo-Überlauf von Leitachse. Es wird jedoch darauf hingewiesen, dass das erfindungsgemäße Verfahren grundsätzlich nicht an die genannten Modulo-Grenzen gebunden sondern flexibel einsetzbar ist. 1.

Fig. 10 zeigt unterschiedliche Bewegungsbahnen bzw. profile 30a, 30b, ... bei unterschiedlich schnell laufender Leitachse 2. Die Geschwindigkeit der Leitachse 1 beträgt hier in allen Bewegungsbahnen 360 Umdrehungen pro Minute. Auch hier erkennt man, dass einzelne Profilsegmente jeweils konstant bleiben und andere, wie ausgeführt, in Folge der Geschwindigkeitsänderungen der Leitachse 2 verändert werden.

Zusammenfassend zeichnen sich die erfindungsgemäßen Kurvenscheiben dadurch aus, dass ein Führungsbewegungsprofil parametrierbar ist und eine Reaktion auf Prozessereignisse oder andere Prozesssignale, wie z. B. die Zeit, möglich ist. Die Bahnrealisierung ergibt sich aus einer entsprechenden Parametrierung während der Entwurfsphase sowie aus Prozessvariablen zur Laufzeit. Damit kann ein flexibles Bewegungsprofil für unterschiedliche bzw. beliebige Werkstückvarianten, Leitachsgeschwindigkeiten usw. erreicht werden. Weiterhin ist eine ereignisgesteuerte Änderung der geplanten Bahn im laufenden Prozess und sogar in der laufenden Bewegung möglich. Dies führt insgesamt zu mehr Flexibilität, einem schnelleren Umrüsten, einem geringeren Aufwand und einer höheren Leistungsfähigkeit.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 8: Folgeachsposition
- 10: Leitgeber
- 11: Bewegungsprofil
- 11a, 11b, 11c, 11d: Profilsegment
- 12: Leitachse
- 13: Leitachsabschnitt / Leitgeberabschnitt
- 13a: Leitgeberzielposition
- 14: Hub
- 14a: Folgeachsenzielposition
- 20a - 20f: Profilsegment
- 21: Bewegungsprofil
- 25a - 25e: Profilsegment
- 28a - 28g: Profilsegment
- 29: Leitachse 2
- 30a, 30b: Bewegungsprofil
- I, II, III, IV: Leitachsenabschnitt
- R1, R2: Randwerte

## Patentansprüche

1. Verfahren zum Betreiben von gesteuerten Maschinen wobei eine Folgebewegung wenigstens eines bewegbaren Maschinenelements der Maschine unter Verwendung eines für diese Bewegung spezifischen Bewegungsprofils (11) gesteuert wird und wobei dieses Bewegungsprofil der Bewegung des Maschinenelements in mehrere Profilsegmente (11 a, 11 b, 11 c) unterteilt wird,
**dadurch gekennzeichnet, dass**
die Profilsegmente (11a, 11 b, 11c) jeweils Leitgebern (10) zugeordnet sind, wobei die Leitgebern von vorgegebenen Führungsgrößen abhängen, und das Bewegungsprofil in den einzelnen Profilsegmenten jeweils von den jeweiligen Leitgebern abhängt, wobei wenigstens zwei Leitgeber (10) voneinander unterschiedlich sind und wenigstens zwei Leitgebern (10) des Bewegungsprofils von zueinander unterschiedlichen Führungsgrößen abhängen.

2. Verfahren nach Anspruch 1,
**dadurch gekennzeichnet, dass**
die Führungsgrößen aus einer Gruppe von Führungsgrößen ausgewählt sind, welche Positionen, Zeiten, Drücke, Geschwindigkeiten, Momente, Kräfte, Kombinationen hieraus und dergleichen enthält.

3. Verfahren nach wenigstens einem der vorangegangenen Ansprüche,
**dadurch gekennzeichnet, dass**
unterschiedliche Führungsgrößen wenigstens teilweise unterschiedlich gewichtet werden.

4. Verfahren nach wenigstens einem der vorangegangenen Ansprüche,
**dadurch gekennzeichnet, dass**
wenigstens ein sich in einem Profilsegment (11 a, 11 b, 11 c) ergebendes Bewegungsprofil (11) als Leitgeber für ein weiteres Profilsegment verwendet wird.

5. Verfahren nach wenigstens einem der vorangegangenen Ansprüche,
**dadurch gekennzeichnet, dass**
Leitgebern miteinender verknüpft werden.

6. Verfahren nach wenigstens einem der vorangegangenen Ansprüche,
**dadurch gekennzeichnet, dass**
mittels wenigstens eines Zwischensegments (20d) ein Übergang zwischen zwei Profilsegmenten (20c, 20e), die von unterschiedlichen Leitgebern abhängen ermittelt wird.

7. Verfahren nach wenigstens einem der vorangegangenen Ansprüche,
**dadurch gekennzeichnet, dass**
jedem der Profilsegmente (11 a, 11 b, 11 c) wenigstens eine Bewegungsbedingung zugeordnet wird welche dieses Profilsegment (11a, 11 b, 11 c) beeinflusst und dass jede Bewegungsbedingung wenigstens ein auslösendes Ereignis und wenigstens ein diesem auslösenden Ereignis zugeordnetes und von dem auslösenden Ereignis ausgelöstes Aktionsereignis umfasst wobei das Aktionsereignis das Profilsegment (11a, 11 b, 11 c) beeinflusst.

8. Verfahren nach Anspruch 7,
**dadurch gekennzeichnet, dass**
die Änderung des Profilsegments (11 a, 11 b, 11 c) in Echtzeit berechnet wird.

9. Verfahren nach Anspruch 7,
**dadurch gekennzeichnet, dass**
die Änderung mehrerer und bevorzugt aller Profilsegmente in Echtzeit berechnet wird.

10. Steuerungsvorrichtung zum Betreiben von numerisch gesteuerten Maschinen wobei diese Steuerungsvorrichtung derart gestaltet ist, dass eine Bewegung wenigstens eines bewegbaren Maschinenelements der Maschine unter Verwendung eines für diese Bewegung spezifischen Bewegungsprofils gesteuert wird, wobei dieses Bewegungsprofil (11) in eine Vielzahl von Profilsegmenten (11a, 11 b, 11 c, 11d) unterteilt ist
**dadurch gekennzeichnet, dass**
eine Steuerungseinrichtung vorgesehen ist, welche bewirkt, dass die Profilsegmente jeweils Leitgebern zugeordnet werden, wobei die Leitgeber von vorgegebenen Führungsgrößen abhängen, und sich das Bewegungsprofil (11) in den einzelnen Profilsegmenten (11a, 11 b, 11 c) jeweils aus den jeweiligen Leitgebern ergibt, wobei wenigstens zwei Leitgeber voneinander unterschiedlich und bevorzugt unabhängig sind und wenigstens zwei Leitgeber des Bewegungsprofils (11) von zueinander unterschiedlichen Führungsgrößen abhängen.
